# EUROPEAN PATENT SPECIFICATION

(11) **EP 1 619 429 B1**
(45) Date of publication and mention of the grant of the patent: **20.01.2010**
(21) Application number: 05014260.3
(22) Date of filing: 30.06.2005
(51) Int. Cl.: F16J 15/14

(54) **Gasket producing method**
Verfahren zur Herstellung einer Dichtung
Procédé de fabrication d'un joint d'étanchéité

(30) Priority: 23.07.2004 JP 2004215482
(43) Date of publication of application: 25.01.2006
(73) Proprietor: Carl Freudenberg KG, 69469 Weinheim (DE)
(72) Inventor: Oka, Nobuyuki, Fukushima-shi Kanagawa 251-0042 (JP); Yamada, Shuzo, Fukushima-shi Kanagawa 251-0042 (JP)

(56) References cited:
- DE-A1- 19 619 999

## Description

### BACKGROUND OF THE INVENTION

### Field of the Invention

The present invention relates to a producing method of a gasket corresponding to one kind of a sealing apparatus, and more particularly to a producing method of a gasket produced by using a dispenser.

### Description of the Related Art

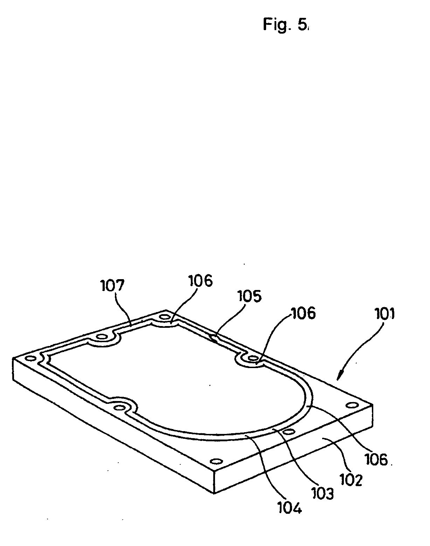

A producing method of a gasket 101 is executed, as shown in Fig. 5, by coating a liquid-like gasket seal mold material 103 on an object surface to be coated of a gasket substrate 102 in accordance with a predetermined coating pattern by a dispenser, and directly irradiating an ultraviolet light to the gasket seal mold material 103 coated on the substrate 102 so as to harden, thereby forming a gasket seal 104.

In this case, when coating the gasket seal mold material 103 on the substrate 102 by the dispenser, a cross section height of the gasket seal mold material 103 in an overlap portion 105 between a coating start portion and a coating end portion becomes higher than the other portions. Further, if a coated portion is constituted by a curve portion 106 at a time of coating the mold material 103 on the substrate 102 in accordance with a predetermined coating pattern, a change in a forward moving direction of a dispenser discharge port becomes great and a coating amount is increased in accordance with a radius of curvature being smaller. Accordingly, the cross section height of the gasket seal mold material 103 of the curve portion 106 becomes higher than a straight portion 107. If the ultraviolet ray is directly irradiated so as to harden in a state in which the cross section height of the gasket seal mold material 103 is different, the substrate 102 is deformed or broken at a time of loading the gasket 101 because of the different height of the gasket seal 104. As a result, there has been a problem that a seal function is lowered (refer to Japanese Unexamined Patent Publication No. 2002-174343).

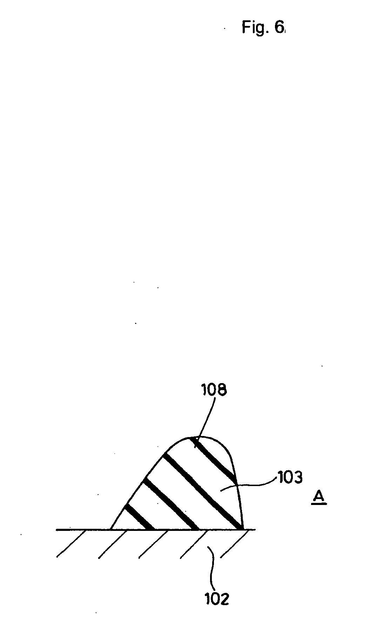

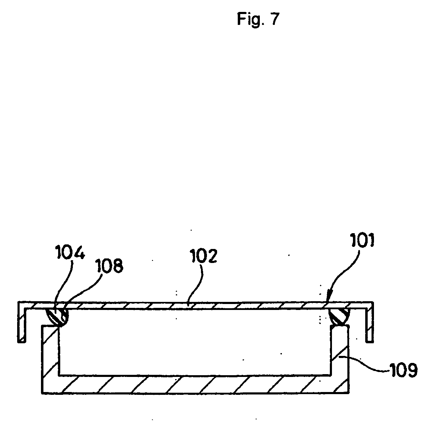

Further, in the case of coating the gasket seal mold material 103 on the substrate by the dispenser, a certain distance exists between the dispenser discharge port and the substrate 102, and the gasket seal mold material 103 has a viscosity. Accordingly, since a certain time is required until the gasket seal mold material 103 output from the dispenser discharge port reaches the substrate 102, and the dispenser discharge port moves during the time, a cross sectional shape of the coated gasket seal mold material 103 becomes asymmetric in the curve portion 106 and a seal end portion 108 is inclined to an inner peripheral side, as shown in Fig. 6. When directly irradiating the ultraviolet ray in the inclined state so as to harden, there is a problem that the gasket seal 104 is detached from a seal set object portion 109 at a time of loading the gasket 101, as shown in Fig. 7, whereby a sealing property can not be secured. A further method is described by DE-A-196 19 999.

### SUMMARY OF THE INVENTION

The present invention is made by taking the point mentioned above into consideration, and an object of the present invention is to provide a producing method of a gasket which coats a gasket seal mold material on an object surface to be coated of a gasket substrate by using a dispenser so as to harden, wherein a cross section height of a gasket seal is uniform, a cross section shape is nearly uniform between right and left, and a sealing property is excellent.

In order to achieve the object mentioned above, in accordance with a first aspect of the present invention, there is provided a method for producing a gasket, wherein a gasket seal mold material is coated on an object surface to be coated of a gasket substrate by using a dispenser and is hardened, characterized in that a quartz glass plate is loaded on a seal end portion of the gasket seal mold material coated on the gasket substrate and the gasket seal mold material is hardened by a light irradiation permeable through the quartz glass plate.

Further, in accordance with a second aspect of the present invention, there is provided a method of producing a gasket, wherein a gasket seal mold material is coated on an object surface to be coated of a gasket substrate by using a dispenser and is hardened, characterized in that after a light irradiation on the gasket seal mold material coated on the gasket substrate, a high transparent plate is loaded on a seal end portion of the gasket seal mold material and the gasket seal mold material is hardened by a light irradiation permeable through the high transparent plate.

The present invention achieves the following effects.

Since in the method for producing the gasket in accordance with the first aspect of the present invention provided with the structure mentioned above, the quartz glass plate is loaded on the seal end portion of the gasket seal mold material coated on the gasket substrate by the dispenser, and the gasket seal mold material is hardened by the light irradiation permeable through the quartz glass plate, it is possible to make the cross section height uniform by pressing the quarts glass plate even if the cross section height of the gasket seal mold material coated by the dispenser is different, and the gasket mold material is hardened thereafter by irradiating the light transmitting the quartz glass plate, so that it is possible to form the gasket seal in a state in which the cross section height is uniform. Accordingly, it is possible to prevent the deformation and the breakage of the substrate at a time of loading the gasket generated due to the different height of the gasket seal. As a result, it is possible to prevent the seal function from being lowered. Further, even if the cross section shape of the gasket seal mold material coated on the curve portion by the dispenser becomes asymmetric and the seal end portion is inclined to the inner peripheral side, it is possible to correct the incline toward the inner peripheral side by pressing the quarts glass plate, and the gasket mold material is thereafter hardened by irradiating the light transmitting the quarts glass plate. Accordingly, it is possible to form the gasket seal in which the cross section shape is nearly uniform between the left and right. Therefore, it is possible to prevent the gasket seal at a time of loading the gasket from being detached from the seal set object portion, whereby the seal property can not be secured.

Further, since in the method for producing the gasket in accordance with the second aspect of the present invention provided with the structure mentioned above, the light such a level that the surface is hardened before loading the high transparent plate is irradiated to the gasket seal mold material coated on the gasket substrate by the dispenser, it is possible to prevent the high transparent plate from being adhered to the seal end portion even if the high transparent plate is loaded on the seal end portion of the gasket seal mold material. Since the high transparent plate is thereafter loaded on the seal end portion and the gasket seal mold material is hardened by the light irradiation permeable through the high transparent plate, it is possible to make the cross section height uniform by pressing the high transparent plate even if the cross section height of the gasket seal mold material coated by the dispenser is different, and since the gasket seal mold material is thereafter hardened by the light irradiation permeable through the high transparent plate, it is possible to form the gasket seal in a state in which the cross section height is uniform. Accordingly, it is possible to prevent the deformation and the breakage of the substrate at a time of loading the gasket generated due to the different height of the gasket seal. As a result, it is possible to prevent the seal function from being lowered. Further, even if the cross section shape of the gasket seal mold material on the curve portion becomes asymmetric and the seal end portion is inclined to the inner peripheral side, it is possible to correct the incline toward the inner peripheral side by pressing the high transparent plate, and it is possible to form the gasket seal in which the cross sectional shape is nearly uniform between the left and right. Accordingly, it is possible to prevent the gasket seal at a time of loading the gasket from being detached from the seal set object portion, whereby the seal property can not be secured.

### BRIEF DESCRIPTION OF THE DRAWINGS

Fig. 1 is a perspective view of a gasket in accordance with a prior art;
Figs. 2A and 2B are cross sectional views of main portions of a straight portion and a curve portion of a gasket seal mold material in accordance with an embodiment of the present invention, respectively;
Figs. 3A and 3B are cross sectional views of main portions of a straight portion and a curve portion in a state in which a quartz glass plate or a high transparent plate is loaded on the gasket seal mold material in accordance with the embodiment of the present invention, respectively;
Figs. 4A and 4B are cross sectional views of main portions of a straight portion and a curve portion of the gasket seal mold material in accordance with the embodiment of the present invention, respectively;
Fig. 5 is a perspective view of a gasket in accordance with a prior art;
Fig. 6 is a cross sectional view of a main portion of a curve portion of a gasket seal mold material in accordance with the prior art; and
Fig. 7 is a cross sectional view of a gasket loading state in accordance with the prior art.

### DESCRIPTION OF THE PREFERRED EMBODIMENT

A description will be given next of an embodiment in accordance with the present invention with reference to the accompanying drawings.

### (First Embodiment)

A gasket 1 in accordance with one embodiment of the present invention is produced in the following manner.

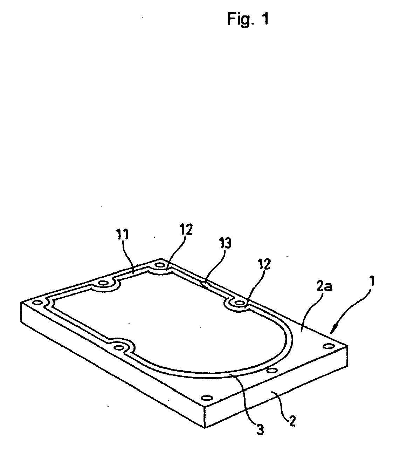

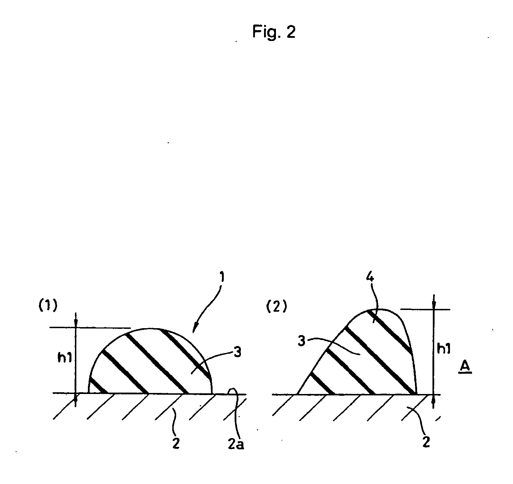

In other words, as shown in Fig. 1, a liquid-like gasket seal mold material 3 made of a predetermined elastic material such as a polyurethane, a silicone rubber or the like and having a viscosity is first coated on an object surface 2a to be coated of a flat plate substrate 2 formed by a predetermined steel material such as a metal, a hard resin or the like as shown in Fig. 1 in accordance with a predetermined coating pattern by a dispenser (not shown). In this state, a dispersion is generated in a cross section height h1 of the mold material 3 shown in Fig. 2A, on the basis of a difference between a straight portion 11 and a curve portion 12, and a joined portion 13 in which a coating start portion and a coating end portion of the mold material 3 are overlapped. Further, since a certain distance exists between a dispenser discharge port and a substrate, and the gasket seal mold material has a viscosity, a cross sectional shape of the gasket seal mold material 3 coated as shown in Fig. 2B becomes asymmetric in the curve portion 12, and a seal end portion 4 is inclined to an inner peripheral side A.

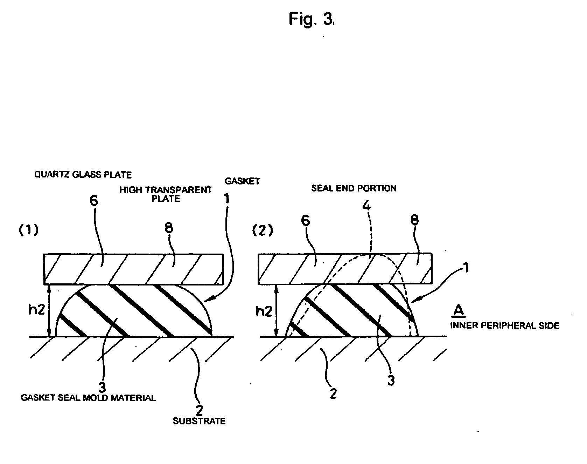

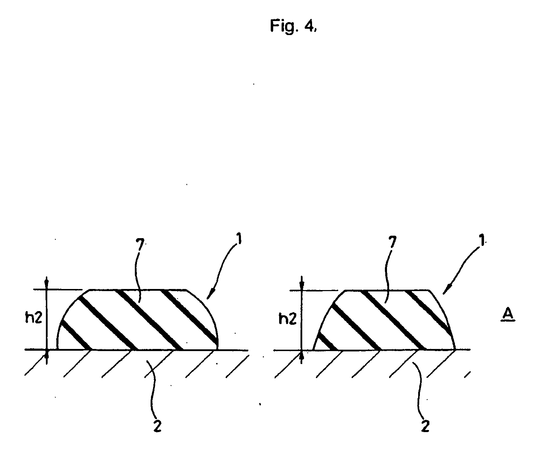

Next, as shown in Fig. 3A, a cross section height h2 is made uniform in an entire surface by loading a high purity quartz glass plate 6 having a high transparency on a seal end portion 4 of the gasket seal mold material 3 coated on the substrate 2, and pressing the quartz glass plate 6 so as to crush the seal end portion 4 of the mold material. Further, as shown in Fig. 3B, in a position in which a cross sectional shape is non-uniform between left and right and the seal end portion 4 is inclined to an inner peripheral side A, the cross sectional shape is made close to the uniform between the left and right, by pressing the quartz glass 6 so as to correct the incline of the seal end portion 4. Thereafter, the mold material 3 is hardened by irradiating an ultraviolet ray through the loaded high purity quartz glass plate 6 having the high transparency, thereby forming a gasket seal 7 having a shape in which the cross section height h2 shown in Figs. 4A and 4B is the same and the cross sectional shape is nearly uniform between the left and right.

In a manufacturing method of the gasket 1 provided with the structure mentioned above, since it is possible to make the cross section height h2 uniform by pressing the quarts glass plate 6 loaded on the seal end portion 4 even if the cross section height h1 of the gasket seal mold material 3 coated by the dispenser is different, and the gasket mold material is hardened thereafter by irradiating the ultraviolet ray transmitting the quartz glass plate 6, so that it is possible to form the gasket seal 7 in a state in which the cross section height h2 is uniform. Further, even if the cross section shape of the gasket seal mold material 3 coated on the curve portion by the dispenser becomes asymmetric and the seal end portion 4 is inclined to an inner peripheral side A, it is possible to correct the incline toward the inner peripheral side A by pressing the quarts glass plate 6, and the gasket mold material is thereafter hardened by irradiating the ultraviolet ray transmitting the quarts glass plate 6. Accordingly, it is possible to form the gasket seal 7 in which the cross section shape is nearly uniform between the left and right.

In this case, in the case that the ultraviolet ray is used as the light, it is desirable that the quartz glass 6 loaded on the gasket seal mold material 3 is constituted by a high purity quartz glass 6 having a high transparency taking a transmission factor of the ultraviolet ray into consideration.

### (Second Embodiment)

A gasket 1 in accordance with one embodiment of the present invention is produced in the following manner.

In other words, as shown in Fig. 1, a liquid-like gasket seal mold material 3 made of a predetermined elastic material such as a polyurethane, a silicone rubber or the like and having a viscosity is first coated on an object surface 2a to be coated of a flat plate substrate 2 formed by a predetermined steel material such as a metal, a hard resin or the like as shown in Fig. 1 in accordance with a predetermined coating pattern by a dispenser (not shown). In this state, a dispersion is generated in a cross section height h1 of the mold material 3 shown in Fig. 2A, on the basis of a difference between a straight portion 11 and a curve portion 12, and a joined portion 13 in which a coating start portion and a coating end portion of the mold material 3 are overlapped. Further, since a certain distance exists between a dispenser discharge port and a substrate, and the gasket seal mold material has a viscosity, a cross sectional shape of the gasket seal mold material 3 coated as shown in Fig. 2B becomes asymmetric in the curve portion 12, and a seal end portion 4 is inclined to an inner peripheral side A.

Next, the ultraviolet ray such a level that the surface is hardened is irradiated to the gasket seal mold material 3 in this state. As the irradiating method, it is preferable to employ a method of sequentially irradiating the ultraviolet ray to an entire surface of the mold material 3 in accordance with the same locus as the coating pattern just after coating the mold material 3, a method of immediately irradiating the mold material 3 coated by a light source provided in the dispenser discharge port at a time of coating, or the like. Thereafter, as shown in Fig. 3A, a cross section height h2 is made uniform in an entire surface by loading a high transparent plate 8 formed by an acryl resin, a polycarbonate resin or the like, on a seal end portion 4 of the gasket seal mold material 3 in which the ultraviolet ray is irradiated to a surface coated on the substrate 2, and pressing the high transparent plate 8 so as to crush the gasket seal end portion 4 of the mold material. Further, as shown in Fig. 3B, in a position in which a cross sectional shape is non-uniform between left and right and the seal end portion 4 is inclined to an inner peripheral side A, the cross sectional shape is made close to the uniform between the left and right, by pressing the high transparent plate 8 so as to correct the incline of the seal end portion 4. Thereafter, the mold material 3 is hardened by irradiating an ultraviolet ray through the loaded high transparent plate 8 having the high transparency, thereby forming a gasket seal 7 having a shape in which the cross section height h2 shown in Figs. 4A and 4B is the same and the cross sectional shape is nearly uniform between the left and right.

In a manufacturing method of the gasket 1 provided with the structure mentioned above, since the ultraviolet ray such a level that the surface is hardened before loading the high transparent plate 8 on the coated mold material 3 is irradiated to the mold material 3, it is possible to prevent the high transparent plate 8 from being adhered to the mold material 3. further, since the high transparent plate 8 is thereafter loaded, it is possible to form the gasket seal 7 in which the cross section height h2 is uniform and the cross sectional shape is nearly uniform between the left and right.

In this case, as the high transparent plate 8, it is possible to employ the high purity quartz glass plate 6 having the high transparency in the same manner as the first embodiment. Further, the loaded high transparent plate 8 is appropriately selected while taking the transparency of the used light into consideration. In the case of using the ultraviolet ray, the other materials than that mentioned above may be used as far as the transparency is good.

Further, an amount of irradiation of the again irradiated light is set to such a level as the mold material 3 is hardened by a sum of the original irradiation amount.

In this case, the light irradiated in the first embodiment and the second embodiment may be constituted by a light which can harden the gasket seal mold material 3, and is appropriately selected on the basis of the material of the mold material 3.

## Claims

1. A method for producing a gasket (1), wherein a gasket seal mold material (3) is coated on an object surface to be coated of a gasket substrate (2) by using a dispenser and is hardened, **characterized in that** a quartz glass plate (6) is loaded on a seal end portion (4) of the gasket seal mold material (3) coated on the gasket substrate (2) and the gasket seal mold material (3) is hardened by a light irradiation permeable through the quartz glass plate (6).

2. A method of producing a gasket (1), wherein a gasket seal mold material (3) is coated on an object surface to be coated of a gasket substrate (2) by using a dispenser and is hardened, **characterized in that** after a light irradiation of the entire surface of the gasket seal mold material (3) coated on the gasket substrate (2), a high transparent plate (6,8) is loaded on a seal end portion (4) of the gasket seal mold material (3) and the gasket seal mold material (3) is hardened by a light irradiation permeable through the high transparent plate (6,8).

## Patentansprüche

1. Verfahren zur Herstellung einer Dichtung (1), wobei ein Dichtungsformmaterial (3) auf einer zu beschichtenden Objektfläche eines Dichtungssubstrats (2) unter Verwendung einer Ausgabevorrichtung aufgebracht und gehärtet wird, **dadurch gekennzeichnet, dass** eine Quarzglasplatte (6) auf einen Dichtungsendteil (4) des auf dem Dichtungssubstrat (2) aufgebrachten Dichtungsformmaterials (3) geladen wird und das Dichtungsformmaterial (3) durch eine die Quarzglasplatte (6) durchdringende Lichtbestrahlung gehärtet wird.

2. Verfahren zur Herstellung einer Dichtung (1), wobei ein Dichtungsformmaterial (3) auf einer zu beschichtenden Objektfläche eines Dichtungssubstrats (2) unter Verwendung einer Ausgabevorrichtung aufgebracht und gehärtet wird, **dadurch gekennzeichnet, dass** nach einer Lichtbestrahlung der gesamten Fläche des auf das Dichtungssubstrat (2) aufgebrachten Dichtungsformmaterials (3) eine hochtransparente Platte (6, 8) auf einen Dichtungsendteil (4) des Dichtungsformmaterials (3) geladen wird und das Dichtungsformmaterial (3) durch eine die hochtransparente Platte (6, 8) durchdringende Lichtbestrahlung gehärtet wird.

## Revendications

1. Procédé de production d'un joint d'étanchéité (1), dans lequel un matériau (3) de moulage de joint d'étanchéité est appliqué à l'aide d'un distributeur sur la surface d'un support (2) de joint d'étanchéité qui doit être revêtue, et est durci,
**caractérisé en ce que**
une plaque (6) de verre de quartz est chargée sur une partie d'étanchéité (4) du matériau (3) de moulage de joint d'étanchéité appliqué sur le support (2) de joint d'étanchéité et
**en ce que** le matériau (3) de moulage de joint d'étanchéité est durci en étant irradié par de la lumière qui traverse la plaque (6) de verre de quartz.

2. Procédé de production d'un joint d'étanchéité (1), dans lequel un matériau (3) de moulage de joint d'étanchéité est appliqué à l'aide d'un distributeur sur la surface d'un support (2) de joint d'étanchéité qui doit être revêtue, et est durci,
**caractérisé en ce que**
après que le matériau (3) de moulage de joint d'étanchéité appliqué sur le support (2) de joint d'étanchéité a été irradié par de la lumière sur toute sa surface, une plaque hautement transparente (6, 8) est placée sur une partie d'extrémité (4) du matériau (3) de moulage de joint d'étanchéité et le matériau (3) de moulage de joint d'étanchéité est durci en étant irradié par de la lumière qui traverse la plaque hautement transparente (6, 8).
